# EUROPÄISCHE PATENTSCHRIFT

(11) **EP 3 851 923 B1**
(45) Veröffentlichungstag und Bekanntmachung des Hinweises auf die Patenterteilung: **12.07.2023**
(21) Anmeldenummer: 20151787.7
(22) Anmeldetag: 14.01.2020
(51) Int. Cl.: G05B 19/042, G05B 19/418, H04L 9/32

(54) **LEITSYSTEM FÜR TECHNISCHE ANLAGEN MIT ZERTIFIKATSMANAGEMENT**
CONTROL SYSTEM FOR TECHNICAL INSTALLATIONS WITH CERTIFICATE MANAGEMENT
SYSTÈME DE GUIDAGE POUR INSTALLATIONS TECHNIQUE POURVU DE GESTION DE CERTIFICATS

(43) Veröffentlichungstag der Anmeldung: 21.07.2021
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(56) Entgegenhaltungen:
- WO-A1-2012/123394
- DE-A1-102011 108 003
- US-A1- 2013 185 551

## Beschreibung

Die Erfindung betrifft ein Leitsystem für eine technische Anlage, insbesondere eine Fertigungs- oder Prozessanlage, das wenigstens einen ersten Operator Station Server und einen zweiten Operator Station Server umfasst, und das dazu ausgebildet und vorgesehen ist, im Rahmen eines Zertifikatsmanagements eine Vergabe und eine Revokation von Zertifikaten für Komponenten der technischen Anlage zu initiieren, und eine Revokation eines zuvor ausgestellten Zertifikats innerhalb des Leitsystems in Form einer ersten und einer zweiten Sperrliste bekannt zu machen, mit den Merkmalen des Anspruchs 1. Außerdem betrifft die Erfindung ein Verfahren gemäß Anspruch 4.

Im Rahmen eines Zertifikatsmanagements einer industriellen Anlage müssen Zertifikate nicht nur ausgestellt, sondern auch revoziert werden können. Die Revokation der von einer Anlagenkomponenten verwendeten Zertifikate erfolgt insbesondere bei der Außerbetriebnahme der Anlagenkomponenten und bei deren Austausch (bzw. Ersatz durch eine andere Komponente) und kann zur Laufzeit der Anlage erfolgen. Die verwendeten Zertifikate werden dabei durch die Revokation ungültig gemacht. Ansonsten könnten sie ggf. missbraucht werden, indem z.B. ein abgeschriebenes und ausgebautes Gerät unter Verwendung dieser Zertifikate (ggf. in einem anderen Anlagenteil) zur Kommunikation eingesetzt wird.

Auch im Kontext einer modularen Automatisierung ist die Möglichkeit, die Revokation bestimmter Zertifikate bei Bedarf anstoßen zu können, unabdingbar. Dies liegt daran, dass ein Modul sich in verschiedenen Projekten mit verschiedenen anderen Modulen kombiniert oder kombinieren kann und dabei in der Regel projektspezifische Zertifikate zugewiesen bekommt, die es für die Kommunikation mit anderen Modulen im jeweiligen Projektkontext benötigt. Sobald der Einsatz eines Moduls in einem bestimmten Projektkontext nicht mehr erforderlich ist (und somit zu unterbinden ist), sollen alle dem Modul in diesem Projektkontext zugewiesenen, projektspezifischen Zertifikate revoziert werden, um einen Missbrauch der Zertifikate auszuschließen.

Im Rahmen eines automatisierten Zertifikatsmanagement einer technischen Anlage ist es essentiell, dass allen Anlagenkomponenten, die Zertifikate zur Kommunikation mit anderen Komponenten nutzen, die Möglichkeit zur Verfügung steht, den Revokationsstatus des Zertifikats des jeweiligen Kommunikationspartners jederzeit prüfen zu können. Die Prüfung des Revokationsstatus ist dabei ein obligatorischer Schritt im Rahmen der Zertifikatsvalidierung gemäß dem IETF Standard "RFC 5280" und der IEC Norm 62443-4-2. Falls eine Anlagenkomponente nicht in der Lage ist, den Revokationsstatus des Zertifikats ihres jeweiligen Kommunikationspartners zu prüfen, wird das Zertifikat standardmäßig als ungültig abgelehnt und der Kommunikationsvorgang abgebrochen. Dadurch werden der Normalbetrieb und die Verfügbarkeit einer technischen Anlage stark beeinträchtigt.

Somit ist es im Kontext einer technischen Anlage essentiell wichtig, allen legitimen projektierten Kommunikationspartnern gegenseitigen Zugriff auf die Sperrlisten zu deren Zertifikaten zu ermöglichen. Jede Anlagenkomponente soll auf die aktuelle Sperrliste zum Zertifikat des jeweiligen legitimen Kommunikationspartners sowie auf die Sperrliste zu ihrem eigenen Zertifikat zugreifen können.

Falls in einer Anlage nur eine Zertifizierungsstelle (engl. Certification Authority, kurz: CA) betrieben wird und alle Anlagenkomponenten Zertifikate von dieser Zertifizierungsstelle beziehen, handelt es sich dabei nur um eine (einzige) Sperrliste. Falls jedoch (was häufig der Fall ist) mehrere (ggf. projekt- oder teilanlagenspezifischen) Zertifizierungsstellen zum Einsatz kommen, ist in der Regel zu jeder dieser Zertifizierungsstellen eine Sperrliste vorhanden. Aus Security-Gründen sollte es jedoch ausgeschlossen werden, dass die Anlagenkomponenten einen Zugriff auf Sperrlisten bekommen, den sie im Kontext der Anlage bzw. des jeweiligen Projektes für die Kommunikation mit ihren projektierten Kommunikationspartnern nicht benötigen.

Bei der Revokation der Zertifikate, die - je nach Szenario - durch eine Anlagenkomponente selbst oder durch eine berechtigte (administrative) Instanz angestoßen werden kann, wird ein Revokationsantrag (engl. Revokation Request) an eine Zertifizierungsstelle (engl. Certification Authority oder kurz: CA), die dieses Zertifikat ausgestellt hat, abgesetzt. Derartige Revokationsanträge sind ein Bestandteil von bekannten Zertifikatsmanagementprotokollen, wie z.B. CMP nach RFC 4210, und werden von den Zertifizierungsstellen, z.B. von der sog. EJBCA/PrimeKey CA, unterstützt. Für andere Zertifizierungsstellen, die Protokolle unterstützen, die keine Revokationsanträge als einen Nachrichtentyp in ihrem Umfang haben, kann die Revokation
- entweder manuell, direkt an der Zertifizierungsstelle (z.B. über deren Web-Frontend),
- oder applikativ (z.B. angestoßen durch eine Registrierungsstelle (engl. Registration Authority oder kurz: RA) realisiert werden.

Das von einer Zertifizierungsstelle revozierte Zertifikat wird von dieser Zertifizierungsstelle anschließend auf eine sog. Sperrliste (engl. Certificate Revocation List, CLR) gesetzt, die bereits andere (ursprünglich von ihr ausgestellte und zu einem späteren Zeitpunkt revozierte) Zertifikate beinhaltet. Diese Sperrliste ist spezifisch für die Zertifizierungsstelle und wird in der Regel in der Zertifizierungsstelle bzw. auf dem Server, auf dem diese läuft, lokal abgelegt. Um der Manipulation der Sperrlisten vorzubeugen, werden die Sperrlisten (analog zu Zertifikaten) nach der Ausstellung/ Aktualisierung von den ausstellenden Zertifizierungsstellen (engl. Issuing CAs) unter Verwendung von deren privaten Schlüsseln (engl. Private Keys) signiert. Die Signatur und somit die Integrität und die Authentizität einer Sperrliste kann unter Verwendung des Zertifikats der CA, die diese Sperrliste ausgestellt und signiert hat, geprüft werden. Genauer gesagt wird der öffentliche Schlüssel der CA, der in ihrem Zertifikat mitaufgeführt ist, zur Signaturvalidierung verwendet.

Die in der jeweiligen Zertifizierungsstelle abgelegten Sperrlisten werden in der Regel zyklisch (in festgelegten, in der jeweiligen Zertifizierungsstelle konfigurierten Zeitabständen) regelmäßig aktualisiert. Anschließend können sie manuell oder applikativ (z.B. per http/HTTPS oder mit Hilfe einer entsprechenden Applikation/ eines Skripts) auf bestimmte, andere Instanzen in verschiedenen Netzwerksegmenten der technischen Anlage verteilt werden. Derartige Sperrlisten-Verteilungspunkte (die sog. Certificate Distribution Points, CDPs) sind dabei so einzurichten und die entsprechenden Netzwerkeinstellungen (einschl. der Firewall-Regel) sind so zu konfigurieren, dass jede Anlagenkomponente, die die Zertifikate für die sichere Kommunikation benötigt und als Kommunikationsteilnehmer in einem bestimmten Netzwerksegment agiert, auf einen CDP in diesem Netzwerksegment erfolgreich zugreifen kann. Damit die Anlagenkomponenten "wissen", wo sie die notwendigen Sperrlisten zu den Zertifikaten ihrer Kommunikationspartner finden, werden die Adressen (z.B. URLs) der CDPs von der Zertifizierungsstelle in die Zertifikate miteingefügt oder auf eine andere Art und Weise den Anlagenkomponenten bekannt gemacht (z.B. indem sie in deren Konfigurationsdateien mitaufgenommen werden).

Der Zugriff auf die Sperrlisten, die auf diversen Verteilungspunkten (CDPs) in bestimmten Netzwerksegmenten abgelegt sind, von den Endgeräten, die den Revokationsstatus der Zertifikate ihrer Partner prüfen müssen, funktioniert häufig - beispielsweise aufgrund der vorgenommenen Änderungen der Netzwerkeinstellungen - nicht bzw. "plötzlich" nicht mehr. Dies führt zu Timeouts und Kommunikationsunterbrechungen. Die Anlagenverfügbarkeit wird dadurch stark gefährdet. Die Problembehebung gestaltet sich in diesem Fall in der Regel sehr aufwendig, so dass die Probleme häufig dauerhaft bestehen bleiben.

In der DE 10 2011 108003 A1 ist ein Prozessleitsystem mit einer Mehrzahl räumlich verteilter Netzwerkteilnehmer mit einer gesicherten Kommunikation zwischen den Netzwerkteilnehmern offenbart.

Die US 2013/185551 A1 offenbart ein System zum Synchronisieren und Revozieren von Sicherheitsinformationen.

In der US 2012/123394 A1 ist ein Verfahren für Währungstransaktionen offenbart.

Der Erfindung liegt die Aufgabe zugrunde, ein Leitsystem einer technischen Anlage anzugeben, das ein projektspezifisches Zertifikatsmanagement mit einer zuverlässigen Abfrage eines Revokationsstatus eines Zertifikats ermöglicht.

Diese Aufgabe wird gelöst durch ein Leitsystem für eine technische Anlage mit den Merkmalen des Anspruchs 1. Außerdem wird die Aufgabe gelöst durch ein Verfahren gemäß Anspruch 4. Vorteilhafte Weiterbildungen ergeben sich aus den abhängigen Ansprüchen.

Bei einem Leitsystem der eingangs beschriebenen Art wird die Aufgabe erfindungsgemäß dadurch gelöst, dass das Leitsystem dazu ausgebildet und vorgesehen ist, die erste Sperrliste, die für das erste Engineering-Projekt spezifisch ist, auf dem ersten Operator Station Server und auf dem zweiten Operator Station Server zu hinterlegen, und die zweite Sperrliste, die für das zweite Engineering-Projekt spezifisch ist, auf dem ersten Operator Station Server und auf dem zweiten Operator Station Server zu hinterlegen, wobei die erste Komponente ausschließlich Zugriff auf die erste Sperrliste und die zweite Komponente ausschließlich Zugriff auf die zweite Sperrliste hat, wobei das Leitsystem dazu ausgebildet und vorgesehen ist, den ersten Operator Station Server und den zweiten Operator Station Server derart miteinander abzugleichen, dass auf beiden Operator Station Servern die erste Sperrliste und die zweite Sperrliste mit identischem Inhalt hinterlegt sind.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Bei einer Komponente kann es sich um einzelne Sensoren oder Aktoren der technischen Anlage handeln. Eine Komponente kann aber auch ein Zusammenschluss mehrerer Sensoren und/oder Aktoren sein, beispielsweise ein Motor, ein Reaktor, eine Pumpe oder ein Ventilsystem.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Die Sperrlisten (engl. Certificate Revocation List, CRL) umfassen Informationen über im Leitsystem revozierte Zertifikate. Die Sperrlisten werden in der Regel von einer Zertifizierungsstelle (engl. Certification Authority) des Leitsystems bzw. der technischen Anlage regelmäßig oder ereignisgesteuert - z.B. getriggert durch die Revokation eines Zertifikats - erstmalig oder erneut ausgestellt.

Die Sperrlisten, d.h. die Information bezüglich der bereits revozierten Zertifikate, werden erfindungsgemäß auf beiden Operator Station Servern hinterlegt. Die Operator Station Server sind hochverfügbar und eignen sich als zentrale Ansprechpartner für Komponenten der technischen Anlage, die ein Zertifikat zur Kommunikation benötigen. In besonders vorteilhafter Weise kann sich eine Komponente bei der Abfrage eines Revokationsstatus eines Zertifikats eines (potenziellen) Kommunikationspartners an einen oder beide Operator Station Server wenden, um einen aktuellen Status bezüglich der Revokationen mittels der Sperrliste zu erfragen. Durch den automatischen Abgleich der Sperrlisten zwischen den einzelnen Operator Station Servern ist garantiert, dass die Sperrliste, die für die Abfrage genutzt wird, auch aktuell ist.

Durch die zuvor bereits erläuterte Verbreitung der Nachricht bezüglich der Revokation innerhalb des Leitsystems sind alle Komponenten der technischen Anlage stets auf dem aktuellen Stand bezüglich der vergebenen Zertifikate, was die Gefahr eines Missbrauchs von Zertifikaten deutlich verringert. Durch die Bekanntmachung sind Informationen bezüglich aller revozierten Zertifikate im Anlagenkontext stets verfügbar.

Bevorzugt wird die Revokation ereignisgesteuert und vollautomatisiert vom Prozessleitsystem aus angestoßen, wodurch die zu revozierenden Zertifikate mit möglichst sofortiger Wirkung revoziert werden und deren Revokation auch ohne signifikante Verzögerung bekannt gemacht werden. Dadurch können Verzögerungen im Revokationsvorgang effizient minimiert werden, was das Zertifikatsmanagement des Leitsystems der technischen Anlage insgesamt verbessert.

Als Ereignis kommen beliebige Zustandsänderungen innerhalb der technischen Anlage in Frage. Im Rahmen einer vorteilhaften Weiterbildung der Erfindung stellt eine Änderung von Kommunikationsbeziehungen zwischen einzelnen Komponenten der technischen Anlage ein solches Ereignis dar.

Vorteilhafterweise ist der Revokationsdienst des Leitsystems dazu ausgebildet und vorgesehen, die Revokation von Zertifikaten dadurch zu initiieren, dass der Revokationsdienst einen Revokationsantrag an eine Zertifizierungsstelle stellt. Dabei ist der Revokationsdienst dazu ausgebildet und vorgesehen, die Bearbeitung des Revokationsantrags zu überwachen oder überwachen zu lassen. Dies bedeutet, dass der Revokationsdienst entweder selbst, d.h. unmittelbar, die Bearbeitung des Revokationsantrags überwacht oder diese mittels eines separaten Dienstes, d.h. mittelbar, insbesondere mittels eines Registrierungsdienstes, überwachen lässt.

Die Zertifizierungsstelle wird auch als eine sogenannte "Issuing CA (Certification Authority)" bezeichnet. Eine derartige "Issuing CA" ist in der Regel stets online und stellt, basierend auf eingehenden Zertifikatsanträgen, Zertifikate für diverse Antragsteller aus, die sie mit ihrem eigenen "Issuing CA" Zertifikat signiert. Die Vertrauenswürdigkeit der "Issuing CA" wird dadurch sichergestellt, dass ihr eigenes "Issuing CA" Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die "Root CA" die meiste Zeit offline ist und nur dann - unter der Einhaltung strengster Sicherheitsvorkehrungen - aktiviert bzw. eingeschaltet wird, wenn sie ein Zertifikat für eine zugehörige "Issuing CA" ausstellen soll. Die "Root CA" kann sich außerhalb der technischen Anlage befinden.

Im Rahmen der Überwachung des Revokationsantrags durch den Revokationsdienst kann dieser im Falle einer verzögerten Bearbeitung des Revokationsantrags eine erneute Anfrage an die Zertifizierungsstelle richten (man spricht in diesem Zusammenhang vom sogenannten "Polling"). Dieser Vorgang wird beispielsweise im Standard RFC 4210 beschrieben (RFC = Request for Comments), in welchem das Certificate Management Protocol (CMP) spezifiziert ist.

Bei einer besonders bevorzugten Weiterbildung der Erfindung ist das Leitsystem dazu ausgebildet und vorgesehen, nach einer erfolgten Revokation von Zertifikaten die Revokation innerhalb des Leitsystems bekannt zu machen, wobei die Bekanntmachung insbesondere in Form einer Sperrliste erfolgt.

Im Falle der Verwendung von Sperrlisten kann die Bekanntmachung der revozierten Zertifikate durch die Zertifizierungsstelle erfolgen. Ein solcher Eintrag in die Sperrliste wird durch die Zertifizierungsstelle digital signiert, um die Authentizität der Eintragung zu garantieren. Dies verhindert unter anderem, dass die Sperrliste von einem Benutzer (z.B. Projekteur) oder einem intelligenten Dienst selbst aktualisiert werden kann, was die Gefahr eines Missbrauchs verringert.

Wie zuvor erläutert, weist das Leitsystem wenigstens eine an den ersten Operator Station Server angeschlossene erste Komponente und wenigstens eine an den zweiten Operator Station Server angeschlossene zweite Komponente auf. Die erste Komponente ist Teil eines ersten Engineering-Projektes und die zweite Komponente ist Teil eines zweiten Engineering-Projektes. Dabei ist das Leitsystem dazu ausgebildet und vorgesehen, eine für das erste Engineering-Projekt spezifische erste Sperrliste auf dem ersten Operator Station Server und dem zweiten Operator Station Server zu hinterlegen und eine für das zweite Engineering-Projekt spezifische zweite Sperrliste auf dem ersten Operator Station Server und dem zweiten Operator Station Server zu hinterlegen. Dabei hat die erste Komponente ausschließlich Zugriff auf die erste Sperrliste und die zweite Komponente ausschließlich Zugriff auf die zweite Sperrliste.

Mittels der anlagenweit verfügbaren projektspezifischen Sperrlisten kann ad-hoc ausgesteuert werden, welche Zertifikate projektspezifisch zulässig sind und welche nicht. Jede Anlagenkomponente bekommt - im Einklang mit dem Minimalitätsprinzip (welches im Kontext der Industrial Security eine sehr hohe Priorität hat) - ausschließlich den Zugriff auf die Sperrlisten erteilt, die sie wirklich benötigt und möglichst sofort bzw. zeitnah nach deren Aktualisierung.

Die zuvor formulierte Aufgabe wird zudem durch ein Verfahren gemäß Anspruch 4 gelöst. Das Verfahren umfasst die folgenden Schritte:
a) Initiierung einer Vergabe eines Zertifikats an eine Komponente einer Fertigungs- oder Prozessanlage durch ein Leitsystem der Fertigungs- oder Prozessanlage, wobei das Leitsystem wenigstens einen ersten Operator Station Server und einen zweiten Operator Station Server aufweist, wobei das Leitsystem wenigstens eine an den ersten Operator Station Server angeschlossene erste Komponente und wenigstens eine an den zweiten Operator Station Server angeschlossene zweite Komponente umfasst, und wobei die erste Komponente Teil eines ersten Engineering-Projektes ist und die zweite Komponente Teil eines zweiten Engineering-Projektes ist;
b) Initiierung einer Revokation des Zertifikats durch einen computerimplementierten Revokationsdienst des Leitsystems der Fertigungs- oder Prozessanlage;
c) Bekanntmachung der Revokation des zuvor ausgestellten Zertifikats innerhalb des Leitsystems in Form einer für das erste Engineering-Projekt spezifischen ersten Sperrliste, die auf dem ersten Operator Station Server und auf dem zweiten Operator Station Server hinterlegt wird, und in Form einer für das zweite Engineering-Projekt spezifischen zweiten Sperrliste, die auf dem ersten Operator Station Server und auf dem zweiten Operator Station Server hinterlegt wird;
d) Abgleich des ersten Operator Station Servers und des zweiten Operator Station Servers, derart, dass auf beiden Operator Station Servern die erste Sperrliste und die zweite Sperrliste mit identischem Inhalt hinterlegt sind.

Bezüglich der Erläuterungen zu dem Verfahrensanspruch und die damit verbundenen Vorteile sei auf die obenstehenden Ausführungen zu dem erfindungsgemäßen Leitsystem verwiesen.

Bevorzugt erfolgt die Initiierung der Revokation des Zertifikats automatisiert in Reaktion auf ein bestimmtes Ereignis.

Im Rahmen einer vorteilhaften Weiterbildung des erfindungsgemäßen Verfahrens stellt eine Änderung von Kommunikationsbeziehungen zwischen Komponenten der technischen Anlage ein Ereignis dar, das die automatisierte Initiierung der Revokation des Zertifikats triggert.

Bevorzugt stellt der Revokationsdienst zur Initiierung der Revokation von Zertifikaten einen Revokationsantrag an eine Zertifizierungsstelle, wobei der Revokationsdienst die Bearbeitung des Revokationsantrags überwacht.

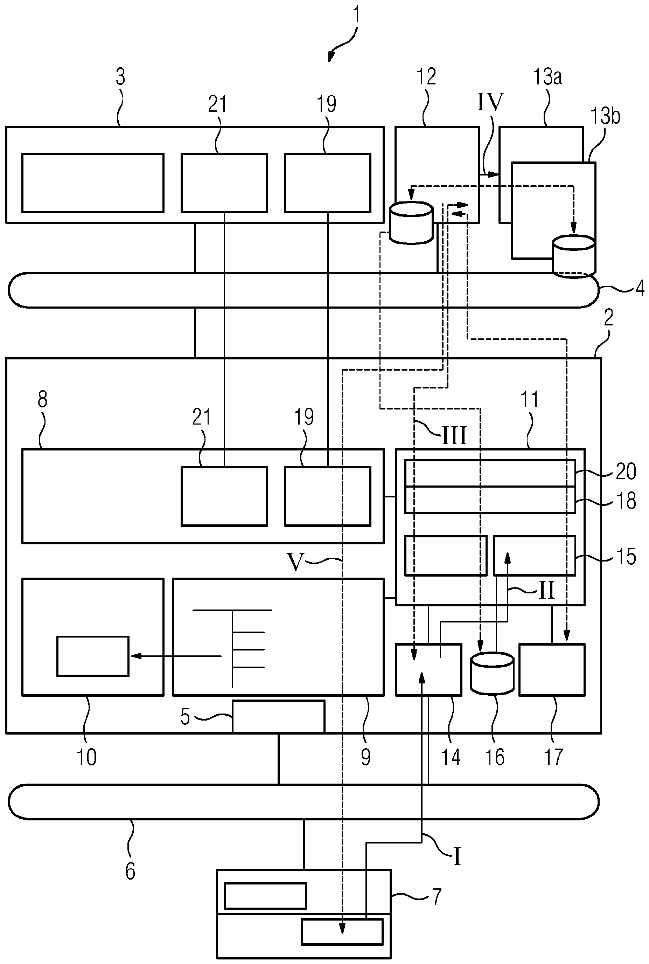

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnischen Anlage ausgebildeten technischen Anlage dargestellt. Das Leitsystem 1 umfasst einen ersten Server eines Bediensystems bzw. einen ersten Operator Station Server 2, einen zweiten Operator Station Server (in der Abbildung nicht dargestellt) und einen dazugehörigen Operator Station Client 3. Die Operator Station Server 2 und der Operator Station Client 3 sind über einen Terminalbus 4 miteinander und mit nicht dargestellten weiteren Komponenten des Leitsystems 1 wie einem Engineering Station Server oder einem Prozessdatenarchiv verbunden.

Ein Benutzer bzw. Operator hat mittels des Operator Station Servers 3 mittels des Terminalbus 4 im Kontext eines Bedienens und Beobachtens Zugriff auf die Operator Station Server 2. Der Terminalbus 4 kann, ohne sich darauf zu beschränken, beispielsweise als Industrial Ethernet ausgebildet sein. Im Folgenden wird der strukturelle Aufbau des ersten Operator Station Servers 2 erläutert. Der zweite (und etwaige weitere) Operator Station Server weist im Kern einen vergleichbaren Aufbau bzw. vergleichbare Funktionalitäten auf.

Der Operator Station Server 2 weist eine Geräteschnittstelle 5 auf, die mit einem Anlagenbus 6 verbunden ist. Hierüber kann der Operator Station Server 2 mit einem (externen) Gerät 7 kommunizieren. Bei dem angeschlossenen Gerät 7 kann es sich dabei alternativ auch um eine Applikation, insbesondere Webapplikation, handeln. Im Rahmen der Erfindung kann eine beliebige Zahl an Geräten und/oder Applikationen 7 an den (bzw. die) Operator Station Server 2 angeschlossen sein. Der Anlagenbus 6 kann, ohne sich darauf zu beschränken, beispielsweise als Industrial Ethernet ausgebildet sein. Das Gerät 7 kann wiederum mit einer beliebigen Anzahl an Subsystemen (nicht dargestellt) verbunden sein.

In dem Operator Station Server 2 ist ein Visualisierungsdienst 8 integriert, über den eine Übertragung von (Visualisierungs-)Daten an den Operator Station Client 3 erfolgen kann. Zudem weist der Operator Station Server 2 ein Prozessabbild (Process Image) 9, ein Prozessdatenarchiv 10 und einen sogenannten "User Profile and Selection Service (UPSS)" 11 auf. In dem Prozessabbild 9 des Operator Station Servers 2 ist eine Momentaufnahme der (Signal-)Zustände der mit dem Operator Station Server 2 über die Geräteschnittstelle 5 verbundenen Geräte und/oder Applikationen 7 hinterlegt. Bereits vergangene (Signal-)Zustände sind zwecks Archivierung in dem Prozessdatenarchiv 10 hinterlegt.

Der "User Profile and Selection Service" 11 stellt eine Datenbank dar, in welcher Anwenderprofile und persönliche Einstellungen eines Operators/Bedieners der verfahrenstechnischen Anlage hinterlegt sind. Diese können auch weiteren Operatoren/Bediener zugänglich sein.

Das Leitsystem 1 umfasst zudem eine Registrierungsstelle 12, eine erste Zertifizierungsstelle 13a und eine zweite Zertifizierungsstelle 13b. Diese sind mittels des Terminalbus 4 mit dem Operator Station Server 2 und dem Operator Station Client 3 verbunden. Die Registrierungsstelle 12 ist zur Entgegennahme und Weiterleitung von Zertifizierungsanträgen an die erste Zertifizierungsstelle 13a und die zweite Zertifizierungsstelle 13b ausgebildet. Die Zertifizierungsstellen 13a, 13b dienen der Ausstellung von Zertifikaten, wobei jeweils eine Zertifizierungsstelle 13a, 13b für ein bestimmtes Engineering-Projekt zuständig, im Kontext dessen Geräte und/oder Applikationen 7 innerhalb der verfahrenstechnischen Anlage miteinander kommunizieren.

Will sich ein Gerät 7 im Kontext eines bestimmten Engineering-Projektes beim Leitsystem 1 anmelden und dessen Funktionalitäten nutzen, benötigt es ein gültiges Zertifikat. In einem ersten Schritt I wendet sich das Gerät 7 an einen Zertifizierungsdienst 14 des Operator Station Servers 2. In einem zweiten Schritt II greift der Zertifizierungsservice 14 auf eine in dem User Profile and Selection Service 11 hinterlegte, für das Engineering-Projekt, innerhalb dessen das Gerät 7 kommunizieren möchte, spezifische Sperrliste 15 zu. In dieser projektspezifischen Sperrliste 15 bzw. in einer Datenbank 16 des User Profile and Selection Service 11 sind zum Zeitpunkt des Zugriffs auf die Sperrliste 15 im Kontext der verfahrenstechnischen Anlage revozierte Zertifikate hinterlegt ("Certificate Revocation List (CRL)").

Steht dem Gerät 7 im Kontext des Engineering-Projektes das zu beantragende Zertifikat zu, d.h. insbesondere ist das Zertifikat nicht als revoziertes Zertifikat in der Sperrliste 15 aufgeführt, wird der entsprechende Zertifikatsantrag in einem dritten Schritt III an die Registrierungsstelle 12 weitergeleitet, die wiederum den Zertifikatsantrag in einem vierten Schritt IV an die zuständige Zertifizierungsstelle 13a, 13b weiterleitet. Das von der zuständigen Zertifizierungsstelle 13a, 13b ausgestellte Zertifikat wird anschließend mittels der Registrierungsstelle 12 an das beantragende Gerät 7 übertragen (Schritt V).

Tritt nun ein bestimmtes Ereignis ein - beispielsweise eine Veränderung von Kommunikationsbeziehungen innerhalb der verfahrenstechnischen Anlage -, kann ein bestimmtes Zertifikat ungültig werden und muss daher revoziert werden. Ausgehend von einem Revokationsservice 17 des Operator Station Servers 2 wird ein Revokationsantrag an die Registrierungsstelle 12 übermittelt. Der Revokationsantrag wird dabei vollautomatisiert ohne direkte Einwirkung eines Projekteurs oder Operators der verfahrenstechnischen Anlage angestoßen. Die zuständige Zertifizierungsstelle 13a, 13b erklärt das betreffende Zertifikat anschließend für ungültig und hinterlegt diese Information auf einer in der Zertifizierungsstelle 13a, 13b hinterlegten projektspezifischen Sperrliste 15. Die aktualisierte Sperrliste 15 wird darauffolgend mittels der Registrierungsstelle 12 an die Datenbank 16 des User Profile and Selection Service 11 übertragen.

Das ereignisgesteuerte Abholen der Sperrliste 15 durch die Registrierungsstelle 12 von der Zertifizierungsstelle 13a, 13b kann dabei auf verschiedenen Wegen realisiert werden. Im einfachsten Fall kann in der Zertifizierungsstelle 13a, 13b ein Trigger konfiguriert werden, der bewirkt, dass die in der Zertifizierungsstelle 13a, 13b lokal hinterlegte Sperrliste 15 nach der Revokation eines Zertifikats sofort durch eine aktualisierte Sperrliste 15 ersetzt wird. Der Ablageort der Sperrliste 15 in der Zertifizierungsstelle 13a, 13b kann von der Registrierungsstelle 12 aus (z.B. durch einen entsprechenden intelligenten Dienst) überwacht werden, damit jede Aktualisierung sofort erkannt und die aktualisierte Sperrliste 15 sofort an den User Profile and Selection Service 11 des Operator Station Servers 2 übermittelt werden kann. Alternativ zur Überwachung des Ablageortes kann die in der Zertifizierungsstelle 13a, 13b lokal hinterlegte Sperrliste 15, die nach der Revokation eines Zertifikats sofort durch eine aktualisierte Sperrliste 15 ersetzt wird, gleichzeitig (ereignisgesteuert, z.B. durch einen entsprechenden intelligenten Dienst) an die Registrierungsstelle 12 weitergeleitet werden. Zur Erhöhung der Verfügbarkeit der Sperrliste 15, bzw. genauer: der projektspezifischen Sperrlisten 15, bei der Verwendung von mehreren Operator Station Servern 2 wird die Datenbank 16 mittels eines Dienstes "Mirroring" 18 zwischen den einzelnen Operator Station Servern 2 abgeglichen.

Über eine von dem Visualisierungsdienst 8 grafisch auf dem Operator Station Client 3 abgebildete Schnittstelle 19 kann ein Operator/Projekteur neue/überarbeitete Ereignisse vorgeben, die mittels eines Manage-Dienstes 20 des User Profile and Selection Services 11 dem Revokationsdienst 17 für zukünftige automatisierte Revokationen von Zertifikaten bereitgestellt werden. Mittels einer weiteren Schnittstelle 21 kann von dem Operator/Bediener festgelegt werden, welche Sperrliste 15 im Kontext welchen Engineering-Projektes genutzt werden können. Diese Information wird mittels des Manage-Dienstes 20 in einer "White List" 22 auf dem Operator Station Server 2 hinterlegt.

Durch die zuvor beschriebenen technischen Merkmale kann eine hohe Verfügbarkeit der für ein effizientes Zertifikatsmanagement unabdingbaren Kenntnis über revozierte Zertifikate erreicht werden. Zudem erhält jedes Gerät 7 - im Einklang mit dem Minimalitätsprinzip, welches im Kontext der Industrial Security eine sehr hohe Priorität hat - ausschließlich den Zugriff auf die aktuellen projektspezifischen Sperrlisten 15 erteilt, die sie wirklich benötigt. Die hierzu notwendigen technischen Funktionen sind "verfahrenstechnisch" in dem Leitsystem 1 integriert, so dass neben den im Umfang des Leitsystems 1 bereits vorhandenen Kommunikationswege keine weiteren Kommunikationswege "außerhalb des Leitsystems 1" für das Revokationsmanagement benötigt werden.

Ein weiterer Vorteil besteht im Hinblick auf Security darin, dass im Netzwerk keine speziellen Einstellungen wegen des erforderlichen Zugriffs auf die Sperrlisten 15 vorgenommen werden müssen (z.B. keine Ports geöffnet werden müssen, was ein hohes Security-Risiko in sich birgt). Das beschriebene Leitsystem 1 eignet sich in hohem Maße für modularisierte Anlagen, bei denen dynamisch verfahrenstechnische Anlagenteile hinzugenommen oder herausgenommen werden.

## Patentansprüche

1. Leitsystem (1) für eine Fertigungs- oder Prozessanlage, das wenigstens einen ersten Operator Station Server (2) und einen zweiten Operator Station Server umfasst, und dazu ausgebildet und vorgesehen ist, im Rahmen eines Zertifikatsmanagements eine Vergabe von Zertifikaten für Komponenten (7) der technischen Anlage zu initiieren, wobei das Leitsystem (1) wenigstens eine an den ersten Operator Station Server (2) angeschlossene erste Komponente und wenigstens eine an den zweiten Operator Station Server angeschlossene zweite Komponente (7) umfasst, und wobei die erste Komponente (7) Teil eines ersten Engineering-Projektes ist und die zweite Komponente (7) Teil eines zweiten Engineering-Projektes ist, und wobei das Leitsystem (1) einen computerimplementierten Revokationsdienst (17) umfasst, der dazu ausgebildet und vorgesehen ist, eine Revokation von Zertifikaten ereignisgesteuert und automatisiert zu initiieren, und eine Revokation eines zuvor ausgestellten Zertifikats innerhalb des Leitsystems (1) in Form einer ersten Sperrliste (15) und einer zweiten Sperrliste (15) bekannt zu machen,
**dadurch gekennzeichnet, dass**
das Leitsystem (1) dazu ausgebildet und vorgesehen ist, die erste Sperrliste (15), die für das erste Engineering-Projekt spezifisch ist, auf dem ersten Operator Station Server (2) und auf dem zweiten Operator Station Server zu hinterlegen, und die zweite Sperrliste (15), die für das zweite Engineering-Projekt spezifisch ist, auf dem ersten Operator Station Server (2) und auf dem zweiten Operator Station Server zu hinterlegen, wobei die erste Komponente (7) ausschließlich Zugriff auf die erste Sperrliste (15) und die zweite Komponente (7) ausschließlich Zugriff auf die zweite Sperrliste (15) hat,
wobei das Leitsystem (1) dazu ausgebildet und vorgesehen ist, den ersten Operator Station Server (2) und den zweiten Operator Station Server derart miteinander abzugleichen, dass auf beiden Operator Station Servern (1) die erste Sperrliste (15) und die zweite Sperrliste (15) mit identischem Inhalt hinterlegt sind.

2. Leitsystem (1) nach Anspruch 1, bei dem eine Änderung von Kommunikationsbeziehungen zwischen der ersten Komponente (7) und der zweiten Komponente (7) der Fertigungs- oder Prozessanlage ein Ereignis darstellt, das zur Initiierung der Revokation von Zertifikaten berücksichtigt werden kann.

3. Leitsystem (1) nach Anspruch 1 oder 2, bei dem der Revokationsdienst (17) dazu ausgebildet und vorgesehen ist, die Revokation von Zertifikaten dadurch zu initiieren, dass der Revokationsdienst (17) einen Revokationsantrag an eine Zertifizierungsstelle (13) stellt, wobei der Revokationsdienst (17) dazu ausgebildet und vorgesehen ist, die Bearbeitung des Revokationsantrags zu überwachen oder überwachen zu lassen.

4. Verfahren, umfassend:
a) Initiierung einer Vergabe eines Zertifikats an eine Komponente (7) einer Fertigungs- oder Prozessanlage durch ein Leitsystem (1) der Fertigungs- oder Prozessanlage, wobei das Leitsystem (1) wenigstens einen ersten Operator Station Server (2) und einen zweiten Operator Station Server aufweist, wobei das Leitsystem (1) wenigstens eine an den ersten Operator Station Server (2) angeschlossene erste Komponente und wenigstens eine an den zweiten Operator Station Server angeschlossene zweite Komponente (7) umfasst, und wobei die erste Komponente (7) Teil eines ersten Engineering-Projektes ist und die zweite Komponente (7) Teil eines zweiten Engineering-Projektes ist;
b) Initiierung einer Revokation des Zertifikats durch einen computerimplementierten Revokationsdienst (17) des Leitsystems (1) der Fertigungs- oder Prozessanlage;
c) Bekanntmachung der Revokation des zuvor ausgestellten Zertifikats innerhalb des Leitsystems (1) in Form einer für das erste Engineering-Projekt spezifischen ersten Sperrliste, die auf dem ersten Operator Station Server (2) und auf dem zweiten Operator Station Server hinterlegt wird, und in Form einer für das zweite Engineering-Projekt spezifischen zweiten Sperrliste (15), die auf dem ersten Operator Station Server (2) und auf dem zweiten Operator Station Server hinterlegt wird;
d) Abgleich des ersten Operator Station Servers (2) und des zweiten Operator Station Servers, derart, dass auf beiden Operator Station Servern (2) die erste Sperrliste (15) und die zweite Sperrliste (15) mit identischem Inhalt hinterlegt sind.

5. Verfahren nach Anspruch 4, bei dem eine Änderung von Kommunikationsbeziehungen zwischen der ersten Komponente (7) und der zweiten Komponente (7) der Fertigungs- oder Prozessanlage ein Ereignis darstellt, das die automatisierte Initiierung der Revokation des Zertifikats triggert.

6. Verfahren nach Anspruch 4 oder 5, bei dem der Revokationsdienst (17) zur Initiierung der Revokation von Zertifikaten einen Revokationsantrag an eine Zertifizierungsstelle (13) stellt, wobei der Revokationsdienst (17) die Bearbeitung des Revokationsantrags überwacht oder überwachen lässt.

## Claims

1. Control system (1) for a manufacturing facility or process plant, which control system (1) comprises at least one first operator station server (2) and one second operator station server, and which is designed and intended to initiate the issuing of certificates for components (7) of the technical installation as part of certificate management, wherein the control system (1) comprises at least one first component connected to the first operator station server (2) and at least one second component (7) connected to the second operator station server, and wherein the first component (7) is part of a first engineering project and the second component (7) is part of a second engineering project, and wherein the control system (1) comprises a computer-implemented revocation service (17) which is designed and intended to initiate a revocation of certificates in an event-controlled and automated manner, and to publish any revocation of a previously issued certificate within the control system (1) in the form of a first certificate revocation list (15) and a second certificate revocation list (15),
**characterised in that**
the control system (1) is designed and intended to store the first certificate revocation list (15), which is specific to the first engineering project, on the first operator station server (2) and on the second operator station server and to store the second certificate revocation list (15), which is specific to the second engineering project, on the first operator station server (2) and on the second operator station server, wherein the first component (7) has access solely to the first certificate revocation list (15) and the second component (7) has access solely to the second certificate revocation list (15),
wherein the control system (1) is designed and intended to synchronise the first operator station server (2) and the second operator station server with one another in such a way that the first certificate revocation list (15) and the second certificate revocation list (15) with identical content are stored on both operator station servers (1).

2. Control system (1) according to claim 1, wherein a change in communication relationships between the first component (7) and the second component (7) of the manufacturing facility or process plant constitutes an event that can be taken into account for initiating the revocation of certificates.

3. Control system (1) according to claim 1 or 2, wherein the revocation service (17) is designed and intended to initiate revocation of certificates by said revocation service (17) submitting a revocation request to a certification authority (13), wherein the revocation service (17) is designed and intended to monitor the processing of the revocation request or cause the monitoring thereof.

4. Method comprising:
a) initiating issuance of a certificate to a component (7) of a manufacturing facility or process plant by a control system (1) of the manufacturing facility or process plant, wherein the control system (1) has at least one first operator station server (2) and one second operator station server, wherein the control system (1) comprises at least one first component connected to the first operator station server (2) and at least one second component (7) connected to the second operator station server, and wherein the first component (7) is part of a first engineering project and the second component (7) is part of a second engineering project;
b) initiating revocation of the certificate by a computer-implemented revocation service (17) of the control system (1) of the manufacturing facility or process plant;
c) publishing the revocation of the previously issued certificate within the control system (1) in the form of a first certificate revocation list specific to the first engineering project which is stored on the first operator station server (2) and on the second operator station server, and in the form of a second certificate revocation list (15) specific to the second engineering project which is stored on the first operator station server (2) and on the second operator station server;
d) synchronising the first operator station server (2) and the second operator station server in such a way that the first certificate revocation list (15) and the second certificate revocation list (15) with identical content are stored on both operator station servers (2).

5. Method according to claim 4, wherein a change in communication relationships between the first component (7) and the second component (7) of the manufacturing facility or process plant constitutes an event that triggers the automated initiation of revocation of the certificate.

6. Method according to claim 4 or 5, wherein the revocation service (17) submits a revocation request to a certification authority (13) to initiate the revocation of certificates, wherein the revocation service (17) monitors the processing of the revocation request or causes the monitoring thereof.

## Revendications

1. Système (1) de conduite d'une installation de fabrication de processus, qui comprend au moins un premier operator station serveur (2) et un deuxième operator station serveur et est constitué et prévu pour, dans le cadre d'une gestion de certificat, lancer une attribution de certificats à des composants (7) de l'installation technique, dans lequel le système (1) de conduite comprend au moins un premier composant raccordé au premier operator station serveur (2) et au moins un deuxième composant (7) raccordé au deuxième operator station serveur et dans lequel le premier constituant (7) fait partie d'un premier projet d'ingénierie et le deuxième composant (7) fait partie d'un deuxième projet d'ingénierie et dans lequel le système (1) de conduite comprend un service (17) de révocation mise en oeuvre par ordinateur, qui est constitué et prévu pour lancer, de manière commandée par un événement et automatisée, une révocation de certificats et pour faire connaître une révocation d'un certificat établi précédemment dans le système (1) de conduite sous la forme d'une première liste (15) d'interdiction et d'une deuxième liste (15) d'interdiction, **caractérisé en ce que**
le système (1) de conduite est constitué et prévu pour mettre en mémoire la première liste (15) d'interdiction, qui est spécifique au premier projet d'ingénierie, sur le premier operator station serveur (2) et sur le deuxième operator station serveur et pour mettre en mémoire la deuxième liste (15) d'interdiction, qui est spécifique au deuxième projet d'ingénierie, sur le premier operator station serveur (2) et sur le deuxième operator station serveur, dans lequel le premier composant (7) a accès exclusivement à la première liste (15) d'interdiction et le deuxième composant (7) a accès exclusivement à la deuxième liste (15) d'interdiction,
dans lequel le système (1) de conduite est constitué et prévu pour aligner le premier operator station serveur (2) et le deuxième operator station serveur entre eux de manière à mettre en mémoire sur les deux operators station serveur (1) la première liste (15) d'interdiction et la deuxième liste (15) d'interdiction de contenu identique.

2. Système (1) de conduite suivant la revendication 1, dans lequel une modification de relation de communication entre le premier composant (7) et le deuxième composant (7) de l'installation de fabrication ou de processus représente un événement, qui peut être pris en compte pour le lancement d'une révocation de certificats.

3. Système (1) de conduite suivant la revendication 1 ou 2, dans lequel le service (17) de révocation est constitué et prévu pour lancer la révocation de certificats par le fait que le service (17) de révocation présente une demande de révocation au poste (13) de certificat, dans lequel le service (17) de révocation est constitué et prévu pour contrôler ou faire contrôler le traitement de la demande de révocation.

4. Procédé comprenant :
a) le lancement d'une attribution d'un certificat à un composant (7) d'une installation de fabrication ou de processus par un système (1) de conduite de l'installation de fabrication ou de processus, dans lequel le système (1) de conduite a au moins un premier operator station serveur (2) et un deuxième operator station serveur, dans lequel le système (1) de conduite comprend au moins un premier composant raccordé au premier operator station serveur (2) et au moins un deuxième composant (7) raccordé au deuxième operator station serveur et dans lequel le premier composant (7) fait partie d'un premier projet d'ingénierie et le deuxième composant (7) fait partie d'une deuxième projet d'ingénierie;
b) le lancement d'une révocation du certificat par un service (17) de révocation mis en oeuvre par ordinateur du système (1) de l'installation de fabrication de processus;
c) la notification de la révocation du certificat établi précédemment au sein du système (1) de conduite sou la forme d'une première liste d'interdiction spécifique au premier projet d'ingénierie, qui est mise en mémoire sur le premier operator station serveur (2) et sur le deuxième operator station serveur et sous la forme d'une deuxième liste (15) d'interdiction spécifique au deuxième projet d'ingénierie, qui est mise en mémoire sur le premier operator station serveur (2) et sur le deuxième operator station serveur;
d) l'alignement du premier operator station serveur (2) et du deuxième operator station serveur de manière à mettre en mémoire sur les deux operators station serveur (2) la première liste (15) d'interdiction et la deuxième liste (15) d'interdiction de contenu identique.

5. Procédé suivant la revendication 4, dans lequel une modification de relation de communication entre le premier composant (7) et le deuxième composant (7) de l'installation de fabrication ou de processus représente un événement, qui déclenche le lancement automatisé de la révocation du certificat.

6. Procédé suivant la revendication 4 ou 5, dans lequel le service (17) de révocation fait, pour le lancement de la révocation de certificats, une demande de révocation à un poste (13) de certification, dans lequel le service (17) de révocation contrôle ou fait contrôler le traitement de la demande de révocation.
